# EUROPÄISCHE PATENTANMELDUNG

(11) **EP 4 188 040 A1**
(43) Veröffentlichungstag der Anmeldung: **31.05.2023**
(21) Anmeldenummer: 22203211.2
(22) Anmeldetag: 24.10.2022
(51) Int. Cl.: H05H 7/00, H05H 7/14, F16L 27/11, F16L 39/04, F16L 51/02

(54) **VERBINDUNGSEINRICHTUNG**

(30) Priorität: 25.11.2021 DE 102021130901
(71) Anmelder: VAT Holding AG, 9469 Haag (CH)
(72) Erfinder: Frast, Karl-Heinz, 6845 Hohenems (AT)
(74) Vertreter: Torggler & Hofmann Patentanwälte - Rankweil

(57) **Zusammenfassung**

Verbindungseinrichtung (1) für ein Leitungssystem zum Hindurchführen von geladenen Teilchen, wobei die Verbindungseinrichtung (1) einen ersten Flansch (2) und einen zweiten Flansch (4) und einen Faltenbalg (6) aufweist, wobei der erste Flansch (2) und der zweite Flansch (4) unter Zwischenschaltung des Faltenbalgs (6) miteinander verbunden sind und der erste Flansch (2) und der zweite Flansch (4) zur Kompensation von Verschiebungen im Leitungssystem in einer Längsrichtung (7) und in zumindest einer dazu abgewinkelten Querrichtung (8) relativ zueinander bewegbar sind, wobei innerhalb des Faltenbalgs (6) ein Leitungselement (10) angeordnet ist, welches die Flansche (2, 4) elektrisch leitend miteinander verbindet, wobei das Leitungselement (10) in oder an Anschlusselementen (13, 14) der beiden Flansche (2, 4) bewegbar gelagert ist und/oder wobei das Leitungselement (10) zumindest eine Ringfeder (15) oder zumindest eine Schraubenfeder (16) aufweist oder daraus besteht.

## Beschreibung

Die vorliegende Erfindung betrifft eine Verbindungseinrichtung gemäß des Oberbegriffs des Patentanspruchs 1.

Gattungsgemäße Verbindungseinrichtungen kommen in sogenannten Synchrotrons oder anderen Teilchenbeschleunigern zum Einsatz. Diese Synchrotrons bzw. Teilchenbeschleuniger weisen ein Leitungssystem bestehend aus Leitungen und/oder Kammern auf, durch die elektrisch geladene Teilchen meist in Form von elektrisch geladenen Teilchenstrahlen hindurchgeführt werden. Gattungsgemäße Verbindungseinrichtungen dienen in solchen Leitungssystemen dazu, thermisch oder anderweitig bedingte Verschiebungen und Längenänderungen auszugleichen bzw. zu kompensieren, so dass es nicht zu übermäßigen Spannungen oder Verzug im Leitungssystem kommt. Hierzu sind solche Verbindungseinrichtungen in sich flexibel ausgestaltet, sodass sich der erste Flansch und der zweite Flansch in der Längsrichtung der Verbindungseinrichtung und auch in zumindest einer dazu abgewinkelten Querrichtung relativ zueinander verschieben können, um so die z.B. thermisch bedingten Verschiebungen und/oder Längenänderungen im Leitungssystem auszugleichen.

Darüber hinaus ist es aber auch wichtig, dass die auch durch die Verbindungseinrichtung bzw. durch den Leitungshohlraum des Leitungselementes hindurchgeführten elektrisch geladenen Teilchen bzw. der Strahl der elektrisch geladenen Teilchen nicht abgelenkt bzw. in anderer Art und Weise negativ beeinflusst wird.

Eine gattungsgemäße Verbindungseinrichtung ist in Fig. 1 der US 2017/0279205 A1 gezeigt. Die in den Fig. 2 bis 4 gezeigten Verbindungseinrichtungen der US 2017/0279205 A1 sind gattungsfremd. Bei ihnen werden die Flansche nicht unter Zwischenschaltung eines Faltenbalgs miteinander verbunden.

Aufgabe der Erfindung ist es, gattungsgemäße Verbindungseinrichtungen dahingehend zu verbessern, dass durch sie Verschiebungen in Längsrichtung und Querrichtung der Verbindungseinrichtung gut kompensiert werden können und gleichzeitig die durch den Leitungshohlraum hindurchgeführten geladenen Teilchen bei dieser Relativverschiebung der Flansche zueinander möglichst wenig bzw. nicht abgelenkt oder anderweitig negativ beeinflusst werden.

Erfindungsgemäß wird dies durch eine Verbindungseinrichtung gemäß Patentanspruch 1 erreicht.

Bei der Erfindung ist somit vorgesehen, dass am ersten Flansch und am zweiten Flansch jeweils ein Anschlusselement zum elektrischen Verbinden des Leitungselements mit dem jeweiligen Flansch angeordnet ist, wobei das Leitungselement in oder an beiden Anschlusselementen bewegbar gelagert ist und/oder wobei das Leitungselement zumindest eine Ringfeder oder zumindest eine Schraubenfeder aufweist oder daraus besteht.

Das erfindungsgemäße Leitungselement sorgt dafür, dass die Querschnittsfläche des innerhalb des Leitungselementes angeordneten Leitungshohlraums bei einer thermisch oder wie auch immer anderweitig bedingten Relativverschiebung der Flansche der Verbindungseinrichtung relativ zueinander möglichst konstant bleibt. Hierdurch wird in Kombination mit dem außen um das Leitungselement herumgeführten Faltenbalg erreicht, dass die durch den Leitungshohlraum der Verbindungseinrichtung hindurchgeführten geladenen Teilchen nicht oder zumindest möglichst wenig abgelenkt oder anderweitig negativ beeinflusst werden. Die Erfindung sorgt dafür, dass die Flansche über ihre Anschlusselemente und das Leitungselement auch bei größeren Verschiebungen der Flansche in Längsrichtung der Verbindungseinrichtung und/oder in deren Querrichtung optimal elektrisch leitend miteinander verbunden bleiben. Dies wird durch die bewegbare Lagerung des Leitungselements in oder an beiden Anschlusselementen und/oder eben dadurch erreicht, dass das Leitungselement als Ringfeder oder Schraubenfeder ausgebildet ist oder eine solche zumindest aufweist.

Die Begriffe der Längsrichtung und der Querrichtung der Verbindungseinrichtung beziehen sich im Zweifelsfall auf die Ausgangsstellung der Verbindungseinrichtung, bei der die beiden Flansche der Verbindungseinrichtung nicht durch äußere Kräfte relativ zueinander verschoben sind. Die Querrichtung(en) ist bzw. sind zur Längsrichtung abgewinkelt. Bevorzugt verlaufen die Querrichtung(en) orthogonal zur Längsrichtung.

Erfindungsgemäße Verbindungseinrichtungen werden bevorzugt in Leitungssystemen von Synchrotrons oder anderen Teilchenbeschleunigern eingesetzt. Diese Leitungssysteme können, wie an sich bekannt, Leitungen aber auch Kammern aufweisen.

Bei erfindungsgemäßen Verbindungseinrichtungen sind der erste Flansch und der zweite Flansch unter Zwischenschaltung des Faltenbalgs miteinander verbunden. Hierfür gibt es verschiedene Ausführungsvarianten. Der Faltenbalg kann sich hierzu über die gesamte Distanz zwischen dem ersten Flansch und dem zweiten Flansch erstrecken und so den ersten Flansch und den zweiten Flansch direkt miteinander verbinden. Es ist aber auch möglich, dass der Faltenbalg sich nur über einen Teilbereich zwischen dem ersten Flansch und den zweiten Flansch erstreckt. In diesen Ausführungsbeispielen ist günstigerweise zumindest an zumindest einem der Flansche ein Mantelrohr angeordnet. Der Faltenbalg kann sich dann z.B. von einem freien Ende des Mantelrohres bis zum anderen Flansch erstrecken. Um den Faltenbalg herum kann noch ein zweites Mantelrohr angeordnet sein, welches dann bevorzugt am anderen Flansch angeordnet bzw. fixiert oder ausgebildet ist. Der Faltenbalg ist jedenfalls günstigerweise aus Metall ausgebildet.

Da die erfindungsgemäße Verbindungseinrichtung der Kompensation von insbesondere thermisch bedingten Längenänderungen und/oder Verschiebungen in einem Leitungssystem dient, könnte sie auch als Kompensationseinrichtung oder als Kompensationsverbindungseinrichtung bezeichnet werden.

Um nicht nur Verschiebungen des Leitungssystems in Längs- und/oder Querrichtung der Verbindungseinrichtung sondern auch Torsionsbewegungen im Leitungssystem kompensieren zu können, sehen besonders bevorzugte Varianten der Erfindung vor, dass zumindest eines der Anschlusselemente, vorzugsweise um eine zur Längsrichtung der Verbindungseinrichtung koaxiale oder zumindest parallele Drehachse, drehbar an dem Flansch gelagert ist, an dem es angeordnet ist.

Das Leitungselement, welches den Leitungshohlraum umgibt, kann in sich umfangsgeschlossen ausgebildet sein. Dies ist aber nicht zwingend notwendig. Wichtig ist vielmehr, dass das Leitungselement die Anschlusselemente und damit die beiden Flansche der Verbindungseinrichtung gut elektrisch leitend miteinander verbindet. Hierzu kann auch vorgesehen sein, dass das Leitungselement eine Vielzahl von Stäben aufweist, wobei die Stäbe parallel zueinander verlaufend und voneinander beabstandet angeordnet sind und gemeinsam einen Teilbereich des Leitungshohlraums oder den gesamten Leitungshohlraum umgeben. Das Leitungselement kann auch ausschließlich aus einer solchen Anordnung von Stäben bestehen.

Um Verschiebungen der Flansche in Längs- und/oder Querrichtung der Verbindungseinrichtung ausgleichen und gleichzeitig eine optimale elektrische Kontaktierung sicherstellen zu können, ist bevorzugt vorgesehen, dass die Stäbe jeweils in oder an beiden Anschlusselementen bewegbar und elektrisch leitend gelagert sind. Besonders bevorzugt ist in diesem Zusammenhang vorgesehen, dass die Stäbe jeweils in Stabaufnahmehohlräumen der beiden Anschlusselemente bewegbar und elektrisch leitend gelagert sind. In den zuletzt genannten Varianten sind die Stäbe bevorzugt mit ihren Enden in den Stabaufnahmehohlräumen bewegbar gelagert. Sie sind dort allseitig von den entsprechenden Wandungen des Anschlusselementes umgeben, sodass es nicht zu einem Abheben der Stäbe vom Anschlusselement kommen kann, sondern vielmehr immer eine sehr gute elektrische Kontaktierung zwischen dem jeweiligen Stab und dem jeweiligen Anschlusselement sichergestellt ist. Bevorzugt ist vorgesehen, dass die Stäbe jeweils einen kreisrunden Querschnitt aufweisen. Auch dies ist im Sinne der Sicherstellung der optimalen elektrischen Kontaktierung sehr günstig. Alternative Varianten sehen aber auch vor, dass die Stäbe als abgeflachte Stäbe ausgebildet sind.

Es kann auch vorgesehen sein, dass an Stäben des jeweiligen Anschlusselements zur elektrisch leitenden Verbindung mit jeweils einem Stab des Leitungselements jeweils zwei, in der Längsrichtung der Verbindungseinrichtung voneinander beabstandete, Auswölbungen ausgebildet sind, wobei die Stäbe mit den Auswölbungen am jeweiligen Stab des Leitungselements elektrisch leitend anliegen und der jeweilige Stab des Leitungselements in einem Bereich zwischen den beiden Auswölbungen auf der dem jeweiligen Stab des jeweiligen Anschlusselements gegenüberliegenden Seite von einer Stützschulter der Verbindungseinrichtung abgestützt ist. Durch die zumindest zwei in Längsrichtung der Verbindungseinrichtung jeweils hintereinander angeordneten Auswölbungen und die, in der Längsrichtung dazwischen angeordnete, Stützschulter ist auch dann eine besonders gute elektrische Kontaktierung zwischen den Stäben des Leitungselements und dem jeweiligen Anschlusselement sichergestellt, wenn es zu größeren Verschiebungen in Längs- und/oder Querrichtungen der Verbindungseinrichtung kommt.

Eine andere Variante, um genau dies zu erreichen, sieht vor, dass die zum jeweiligen Anschlusselement hin weisenden Enden der Stäbe des Leitungselementes jeweils eine Umbiegung aufweisen und das jeweilige Anschlusselement Stäbe mit Umbiegungen aufweist, wobei die Umbiegungen der Stäbe des jeweiligen Anschlusselementes in Zwischenräumen zwischen den Umbiegungen der Stäbe des Leitungselements angeordnet sind und durch die Umbiegungen der Stäbe des jeweiligen Anschlusselementes und durch die Umbiegungen der Stäbe des Leitungselements eine Verbindungsstange hindurchgeführt ist. Günstig ist es hierbei, wenn die jeweiligen Umbiegungen der Stäbe in Form von, sich in der Längsrichtung der Verbindungseinrichtung erstreckenden, Langlöchern ausgebildet sind. Hierdurch wird erreicht, dass der Verbindungsstab in Längsrichtung verschiebbar in den Umbiegungen gelagert ist.

Bei den Varianten, bei denen das Leitungselement eine Ringfeder aufweist oder als solche ausgebildet ist, ist günstigerweise vorgesehen, dass die Ringfeder eine Abfolge von hintereinander angeordneten Ringelementen aufweist, wobei die jeweils aufeinanderfolgenden Ringelemente mittels elastischen Elementen miteinander verbunden und relativ zueinander bewegbar sind. Die Ringelemente können dabei bevorzugt in sich starre Körper sein. Günstigerweise haben alle Ringelemente denselben Durchmesser. Dies muss aber natürlich nicht zwingend so sein. Die zwischen den Ringelementen gelagerten elastischen Elemente sorgen jedenfalls für eine entsprechende Bewegbarkeit der Ringfeder, um so einen Versatz zwischen den Flanschen in Längs- und/oder Querrichtung der Verbindungseinrichtung kompensieren zu können. Auch hier sorgen die Ringelemente dafür, dass das Leitungselement auch in relativ stark ausgelenktem Zustand überall denselben Leitungsquerschnitt aufweist. Zusätzlich zu den elastischen Elementen, welche z.B. als Schraubenfeder ausgebildet sein können, können zwischen den Ringelementen zusätzlich auch elektrische Schleifkontakte angeordnet sein, welche für eine optimale elektrisch leitende Verbindung der aufeinanderfolgenden Ringelemente untereinander und für einen optimalen elektrisch leitenden Übergang vom Leitungselement zum jeweiligen Anschlusselement sorgen.

Bei Ausführungsvarianten der Erfindung, bei denen eine Schraubenfeder Teil eines Leitungselementes ist oder dieses ausbildet, ist günstigerweise vorgesehen, dass die Schraubenfeder eine Vielzahl von hintereinander angeordneten Windungen aufweist, welche elastisch relativ zueinander bewegbar sind. Hierdurch wird auch bei größeren Relativverschiebungen der Flansche in Längs- und/oder Querrichtung des Verbindungselementes ebenfalls sichergestellt, dass der Leitungshohlraum innerhalb des Leitungselementes überall denselben Querschnitt aufweist. Im nicht ausgelenkten Zustand der Verbindungseinrichtung sind die Windungen günstigerweise auf einer gedachten Kreiszylindermantelfläche angeordnet. Besonders bevorzugte Varianten sehen vor, dass das Leitungselement zwei Schraubenfedern aufweist oder aus diesen besteht, wobei eine der Schraubenfedern in einem Innenraum der anderen Schraubenfeder angeordnet ist, wobei vorzugsweise vorgesehen ist, dass die Windungen der beiden Schraubenfedern in Längsrichtung der Verbindungseinrichtung zueinander versetzt angeordnet sind.

Erfindungsgemäße Verbindungseinrichtungen sind günstigerweise dazu ausgelegt, dass im vom Faltenbalg umgebenen Innenraum einen Unterdruck bzw. ein Vakuum im Bereich von 1×10⁻¹⁰ mbar (Millibar) und kleiner ausgebildet werden kann.

Besonders bevorzugte Varianten der Erfindung sehen vor, dass die Flansche, die Anschlusselemente und/oder das Leitungselement aus einer Kupfer-Beryllium-Legierung bestehen bzw. eine solche aufweisen. Alternative Materialien sind Edelstahl oder Kupfer, welche bevorzugt versilbert oder vergoldet sind.

Weitere Merkmale und Einzelheiten der Erfindung sowie bevorzugte Ausgestaltungsvarianten hiervon, werden nachfolgend beispielhaft in der Figurenbeschreibung erläutert. Es zeigen:
- Fig. 1 bis 4: Darstellungen zu einem ersten erfindungsgemäßen Ausführungsbeispiel einer Verbindungseinrichtung;
- Fig. 5 bis 8: Darstellungen zu einem zweiten erfindungsgemäßen Ausführungsbeispiel einer Verbindungseinrichtung;
- Fig. 9 bis 12: Darstellungen zu einer dritten erfindungsgemäßen Ausführungsform einer Verbindungseinrichtung;
- Fig. 13 bis 16: Darstellungen zu einer vierten erfindungsgemäßen Ausführungsform einer Verbindungseinrichtung;
- Fig. 17 bis 20: Darstellungen zu einer fünften erfindungsgemäßen Ausführungsform einer Verbindungseinrichtung und
- Fig. 21 bis 24: Darstellungen zu einer sechsten erfindungsgemäßen Ausführungsform einer Verbindungseinrichtung.

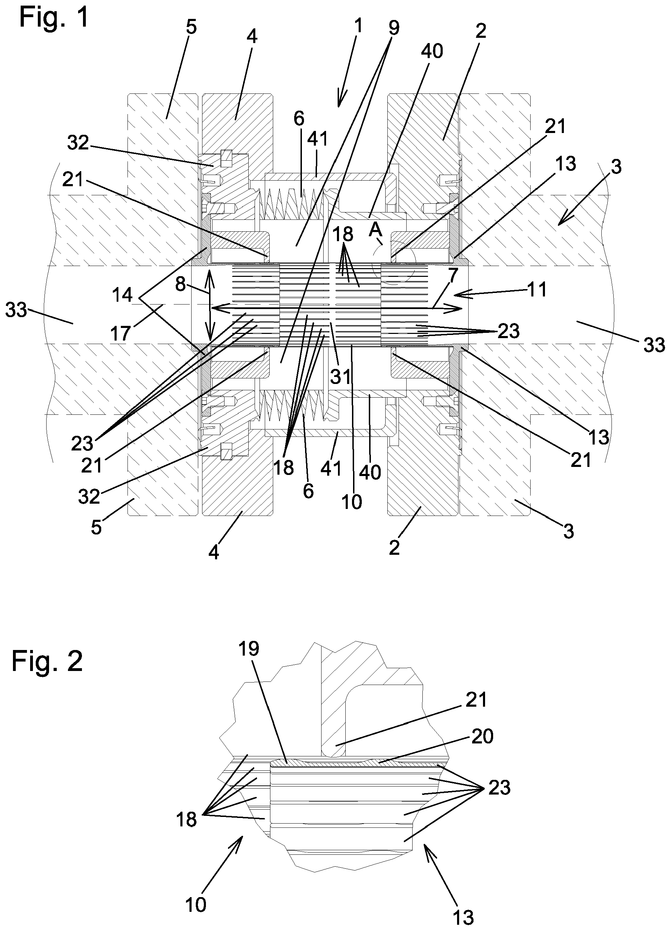

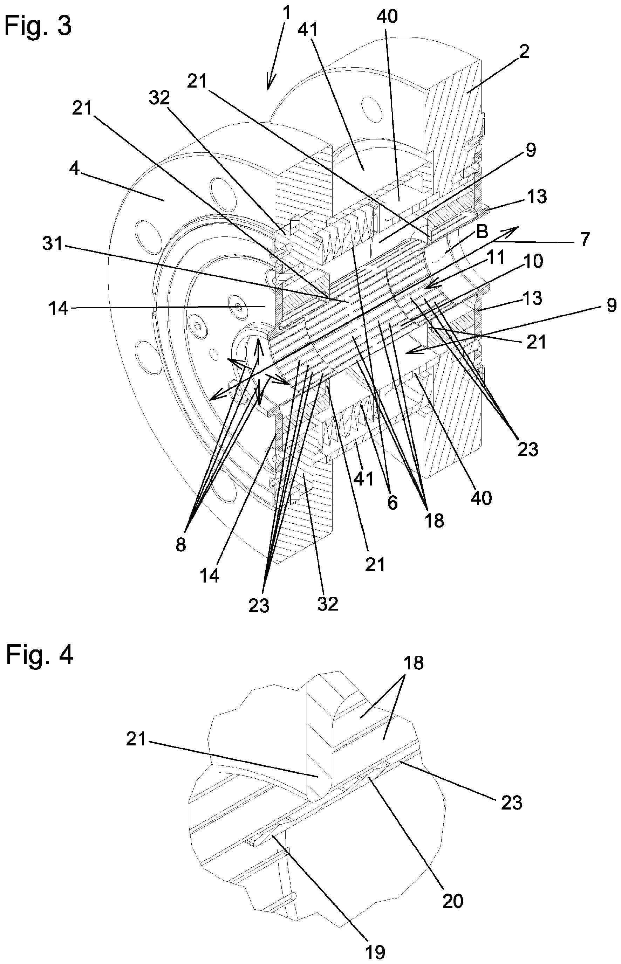

Nachfolgend wird nun zunächst das in den Fig. 1 bis 4 gezeigte erste erfindungsgemäße Ausführungsbeispiel einer Verbindungseinrichtung 1 erläutert. Fig. 1 zeigt einen Längsschnitt durch die erfindungsgemäße Verbindungseinrichtung 1. Fig. 2 zeigt den Bereich A aus Fig. 1 vergrößert. Fig. 3 zeigt eine perspektivische Darstellung der Verbindungseinrichtung 1 und Fig. 4 den Bereich B aus Fig. 3 vergrößert.

Bevor auf die spezielle Ausgestaltungsform des Leitungselements 10 und seiner Anbindung an die Anschlusselemente 13 und 14 bei diesem Ausführungsbeispiel eingegangen wird, werden Merkmale dieser Ausführungsform besprochen, wie sie in den nachfolgenden Ausführungsbeispielen auch realisiert wurden. Dieser Teil der Beschreibung gilt somit für alle hier gezeigten Ausführungsbeispiele.

In allen Ausführungsbeispielen handelt es sich um eine Verbindungseinrichtung 1 für ein Leitungssystem eines Synchrotrons oder eines anderen Teilchenbeschleunigers. Durch dieses Leitungssystem wie auch durch die Verbindungseinrichtung 1 werden somit elektrisch geladene Teilchen, in der Regel in Form eines Strahls von elektrisch geladenen Teilchen hindurchgeführt. Das Leitungssystem kann sowohl Leitungen als auch Kammern umfassen. Die Verbindungseinrichtung 1 umfasst jedenfalls einen ersten Flansch 2 und einen zweiten Flansch 4 sowie einen Faltenbalg 6. Der erste Flansch 2 und der zweite Flansch 4 sind unter Zwischenschaltung des Faltenbalgs 6 miteinander verbunden. In diesem Ausführungsbeispiel ist dies so realisiert, dass der Faltenbalg 6 sich nur über einen Teilbereich der Verbindung zwischen den beiden Flanschen 2 und 4 erstreckt. Konkret ist er hier in diesem Ausführungsbeispiel wie auch in den anderen Ausführungsbeispielen zwischen dem Drehlagerring 32 des zweiten Flansches 4 und einem Mantelrohr 40, welches am ersten Flansch 2 fixiert ist, angeordnet. In alternativen Ausgestaltungsformen könnte sich der Faltenbalg 6 aber zum Beispiel auch vollständig vom ersten Flansch 2 bis zum zweiten Flansch 4 erstrecken. In Fig. 1 sind Leitungen 3 und 5 des Leitungssystems gestrichelt angedeutet. Der erste Flansch 2 ist mit der ersten Leitung 3 und der zweite Flansch 4 mit der zweiten Leitung 5 verbunden. Anstelle der Leitungen 3 oder 5 könnten natürlich auch Kammern des Leitungssystems entsprechend mit einem der Flansche 2 und 4 oder mit beiden Flanschen 2 und 4 verbunden sein. Die Verbindungseinrichtung 1 ist jedenfalls so zwischen den Leitungen 3 und 5 bzw. Kammern des Leitungssystems angeordnet, dass der Leitungsinnenraum 33 der jeweiligen Leitung bzw. ein entsprechender Kammerinnenraum mit dem Leitungshohlraum 11 des Leitungselementes 10 fluchtet und in Verbindung steht, sodass durch den Leitungsinnenraum 33 hindurchgeführte elektrisch geladene Teilchen und insbesondere ein entsprechender Strahl an elektrisch geladenen Teilchen auch entsprechend durch den Leitungshohlraum 11 des Leitungselementes 10 hindurchgeführt wird.

Die Verbindungseinrichtung 1 aller hier gezeigten Ausführungsbeispiele dient der Kompensation von Verschiebungen zwischen der ersten Leitung 3 oder Kammer des Leitungssystems und der zweiten Leitung 5 oder Kammer des Leitungssystems. Diese Verschiebungen können sowohl in Längsrichtung 7 der Verbindungseinrichtung 1 als auch in zumindest einer dazu abgewinkelten, vorzugsweise orthogonalen, Querrichtung 8 der Verbindungseinrichtung 1 erfolgen. Die Flansche 2 und 4 der Verbindungseinrichtung 1 können mit der jeweiligen Leitung 3 oder 5 bzw. Kammer, an der sie befestigt sind, mitbewegt werden. Der Balg 6 und das jeweilige Leitungselement 10 lassen diese Relativbewegung der Flansche 2 und 4 sowohl in Längsrichtung 7 als auch in der oder den Querrichtung(en) 8 zu, sodass es nicht zu Spannungen oder Brüchen im Leitungssystem kommt. Diese Verschiebungen in Längsrichtung 7 und/oder Querrichtung 8 im Leitungssystem können thermisch aber auch anderweitig bedingt sein.

Alle in den hier gezeigten Ausführungsbeispielen realisierten Leitungselemente 10 haben den Vorteil, dass sie entsprechende Relativbewegungen zwischen den Flanschen 2 und 4 kompensieren können, ohne dass die Gefahr besteht, dass ihre elektrisch leitende Verbindung mit den Anschlusselementen 13 und 14 und damit zwischen den Flanschen 2 und 4 unterbrochen wird. Außerdem haben die Leitungselemente 10 den Vorteil, dass sie bei diesen Relativverschiebungen der Flansche 2 und 4 zueinander immer dafür sorgen, dass der Öffnungsquerschnitt des vom Leitungselement 10 umgebenen Leitungshohlraums 11 zumindest im Wesentlichen unverändert bleibt. Hierdurch wird erreicht, dass die durch den Leitungshohlraum 11 hindurchgeführten Teilchen nicht abgelenkt werden und somit der Teilchenstrahl ungestört bleibt.

Bei allen Ausführungsbeispielen ist es jedenfalls so, dass das Leitungselement 10 in dem zumindest bereichsweise vom Faltenbalg 6 umgebenen Innenraum 9 angeordnet ist, wobei die Leitungselemente 10 der verschiedenen Ausführungsbeispiele die Flansche 2 und 4 über die Anschlusselemente 13 und 14 elektrisch leitend miteinander verbinden. Der Innenraum des Leitungselements 10 bildet den Leitungshohlraum 11, durch den die geladenen Teilchen hindurchgeführt werden.

Am zweiten Flansch 4 ist in allen Ausführungsbeispielen, welche hier gezeigt werden, ein Mantelrohr 41 angeordnet. Dieses umgibt den Faltenbalg 6 sowie das am ersten Flansch 2 angeordnete Mantelrohr. Dies kann aber, wie bereits oben ausgeführt, auch anders gelöst werden.

Um nicht nur Relativverschiebungen im Leitungssystem in Längsrichtung 7 und in Querrichtung 8 kompensieren zu können, sondern auch Torsionsbewegungen im Leitungssystem ausgleichen zu können, ist bei allen hier gezeigten Varianten vorgesehen, dass zumindest eines der Anschlusselemente 13 bzw. 14 drehbar an dem jeweiligen Flansch 2 bzw. 4 gelagert ist, an dem es angeordnet ist. Konkret wird dies bei den hier gezeigten Ausführungsbeispielen durch den Drehlagerring 32 realisiert, an dem das Anschlusselement 14 fixiert ist. Dieser Drehlagerring 32 ist im zweiten Flansch 4 drehbar gelagert. Die Drehachse 17, um die der Drehlagerring 32 drehbar ist, verläuft koaxial bzw. zumindest parallel zur Längsrichtung 7.

Bei allen Ausführungsbeispielen ist es jedenfalls so, dass am ersten Flansch 2 und am zweiten Flansch 4 jeweils ein Anschlusselement 13 und 14 zum elektrischen Verbinden des Leitungselementes 10 mit dem jeweiligen Flansch 2 bzw. 4 angeordnet ist.

Bei dem in den Fig. 1 bis 4 gezeigten ersten Ausführungsbeispiel wird, wenn es zur Relativbewegung zwischen den Flanschen 2 und 4 kommt, die elektrische Kontaktierung des Leitungselements 10 mit den beiden Anschlusselementen 13 bis 14 sichergestellt, indem das Leitungselement 10 in oder an beiden Anschlusselementen 13 bzw. 14 bewegbar gelagert ist.

Das Leitungselement 10 weist eine Vielzahl von Stäben 18 auf. Die Stäbe 18 verlaufen parallel zueinander und sind in Umfangsrichtung voneinander beabstandet angeordnet. Sie umgeben gemeinsam zumindest einen Teilbereich des Leitungshohlraums 11. In diesem ersten Ausführungsbeispiel sind die Stäbe 18 des Leitungselements 10 in dessen mittleren Bereich in einem Verbindungsbereich 31 miteinander verbunden.

In diesem ersten Ausführungsbeispiel sind auch an den jeweiligen Anschlusselementen 13 und 14 jeweils Stäbe 23 ausgebildet. Die Stäbe 23 des Anschlusselements 13 sind auf der einen Seite in das Leitungselement 10 hineingeschoben. Die Stäbe 23 des anderen Anschlusselementes 14 sind auf der gegenüberliegenden Seite in das Leitungselement 10 hineingeschoben. Zum elektrisch leitenden Verbinden jeweils eines Stabes 23 der Anschlusselemente 13 und 14 mit jeweils einem Stab 18 des Leitungselementes 10 sind in diesem Ausführungsbeispiel am jeweiligen Stab 23 des jeweiligen Anschlusselementes 13 und 14 jeweils zwei in der Längsrichtung 7 der Verbindungseinrichtung 1 voneinander beabstandete Auswölbungen 19 und 20 ausgebildet. Diese sind besonders gut in der Vergrößerung des Bereichs A aus Fig. 1 in Fig. 2 zu sehen. Der jeweilige Stab 23 liegt mit seinen Auswölbungen 19 und 20 am jeweiligen Stab 18 des Leitungselementes 10 elektrisch leitend an. Im Bereich zwischen den beiden Auswölbungen 19 und 20 sind die Stäbe 18 des Leitungselementes 10 jeweils auf der dem jeweiligen Stab 23 gegenüberliegenden Seite von einer Stützschulter 21 der Verbindungseinrichtung 1 abgestützt. In Fig. 2 wie auch in der perspektivischen Darstellung in Fig. 4 ist gut zu sehen, wie die Stäbe 18 des Leitungselementes 10 zwischen der jeweiligen Stützschulter 21 auf der einen Seite und den Stäben 23 des jeweiligen Anschlusselementes 13 bzw. 14 mit den Auswölbungen 19 und 20 auf der anderen Seite hindurchgeführt sind. Kommt es nun zu einer Relativbewegung der beiden Flansche 2 und 4 in Längsrichtung 7 und/oder in den Querrichtungen 8, so sorgt das Zusammenwirken der Auswölbungen 19 und 20 mit der jeweiligen Stützschulter 21 dafür, dass das Leitungselement 10 mit seinen Stäben 18 immer optimal mit den Anschlusselementen 13 und 14 bzw. deren Stäben 23 elektrisch kontaktiert bleibt. Dadurch ist auch die elektrisch leitende Verbindung zwischen den Flanschen 2 und 4 entsprechend sichergestellt. Die Stäbe 18 des Leitungselements 10 wie auch die Stäbe 23 der Anschlusselemente 13 und 14 sind entsprechend elastisch ausgebildet, um diese Bewegungen der Flansche 2 und 4 relativ zueinander zu ermöglichen. Die geschilderte Art der Verbindung zwischen dem Leitungselement 10 und dem Anschlusselement 14 ist dieselbe wie zwischen dem Leitungselement 10 und dem Anschlusselement 13. Dies ist wiederum in allen Ausführungsbeispielen so.

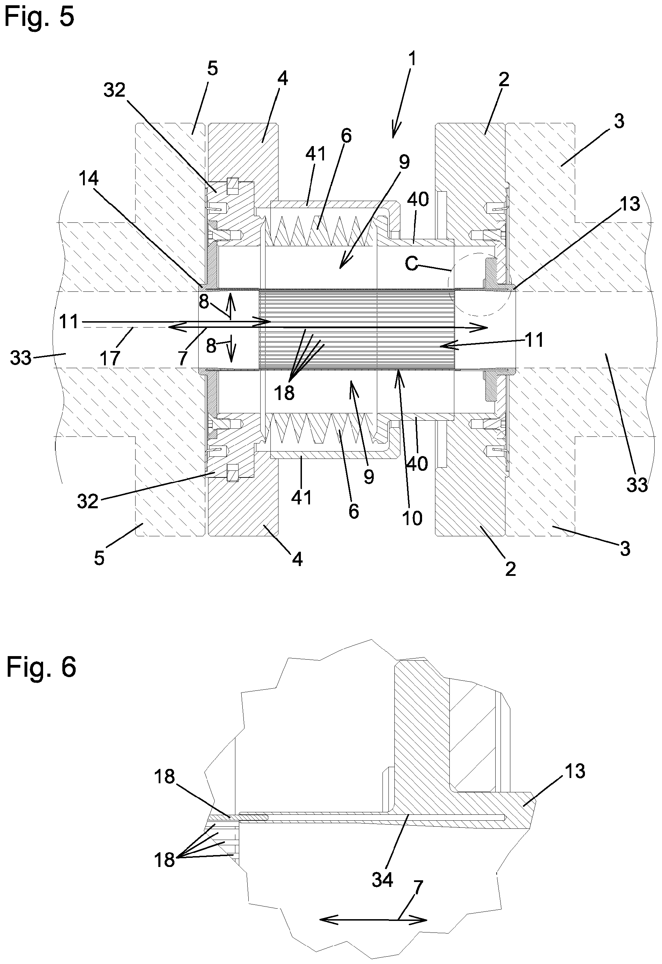

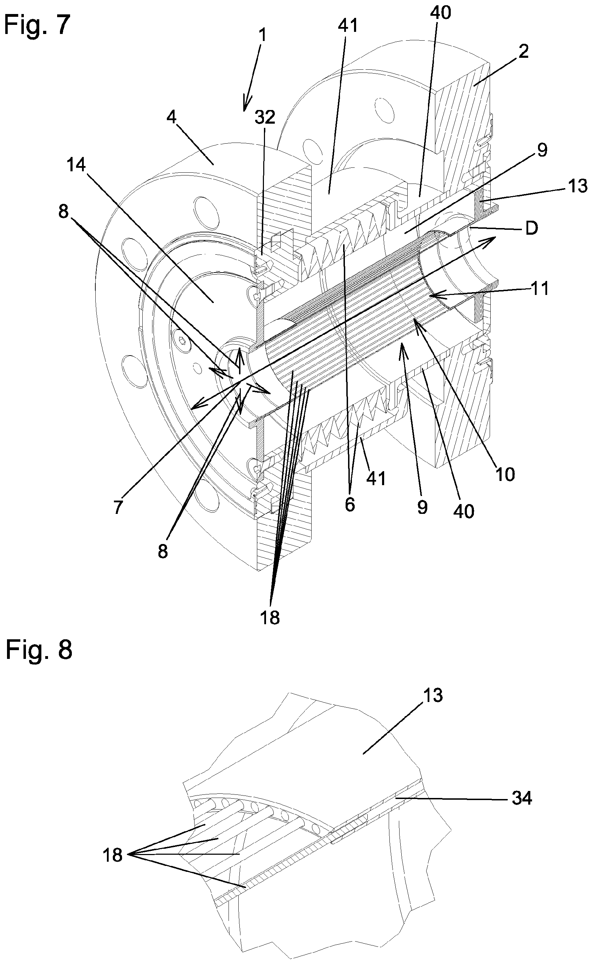

Betrachtet man nun das zweite Ausführungsbeispiel der Erfindung in den Fig. 5 bis 8, so zeigt Fig. 5 wieder einen entsprechenden Längsschnitt. Fig. 6 zeigt den Bereich C aus Fig. 5 vergrößert. Fig. 7 zeigt dieses zweite Ausführungsbeispiel der Verbindungseinrichtung 1 aus Fig. 5 in einer perspektivischen, längsgeschnittenen Darstellung. Fig. 8 zeigt den Bereich D aus Fig. 7 vergrößert. Im Folgenden wird im Wesentlichen auf die Unterschiede zum ersten Ausführungsbeispiel eingegangen. Ansonsten wird auf die vorherigen Ausführungen verwiesen.

Eine Gemeinsamkeit mit dem ersten Ausführungsbeispiel ist zunächst, dass auch hier das Leitungselement 10 eine Vielzahl von Stäben 18 aufweist, welche parallel zueinander verlaufend und voneinander beabstandet angeordnet sind und gemeinsam den Leitungshohlraum 11 zwischen den Anschlusselementen 13 und 14 umgeben. Im Unterschied zum ersten Ausführungsbeispiel sind hier die Stäbe 18 des Leitungselements 10 allerdings nicht in einem Verbindungsbereich 31 miteinander verbunden. Ihre Anordnung ergibt sich vielmehr über ihre Verbindung mit den Anschlusselementen 13 und 14.

In diesem zweiten Ausführungsbeispiel der Erfindung gemäß der Fig. 5 bis 8 weisen die Stäbe 18 jeweils einen kreisrunden Querschnitt auf. Dies ist besonders gut in Fig. 8 zu sehen. Die Stäbe 18 sind jeweils in beiden Anschlusselementen 13 und 14 bewegbar und elektrisch leitend gelagert. Konkret ist in diesem Ausführungsbeispiel vorgesehen, dass die Stäbe 18 mit ihren jeweiligen Endbereichen jeweils in Stabaufnahmehohlräumen 34 der beiden Anschlusselemente 13 und 14 angeordnet sind. Dies ist in Fig. 6 und in Fig. 8 gut zu sehen. Die Stäbe 18 sind in den jeweiligen Stabaufnahmehohlräumen 34 in Längsrichtung verschiebbar gelagert. Die die Stabaufnahmehohlräume 34 umgebenden Wände des Anschlusselementes 13 und 14 sorgen aber auch bei einer entsprechenden Relativverschiebung der beiden Flansche 2 und 3 in Querrichtung 8 immer für eine sichere elektrische Kontaktierung zwischen den Stäben 18 und damit dem Leitungselement 10 und dem jeweiligen Anschlusselement 13 bzw. 14, da die Stäbe 18 in dem Stabaufnahmehohlraum 34 über ihren gesamten Umfang mit dem jeweiligen Anschlusselement 13 bzw. 14 in Kontakt stehen.

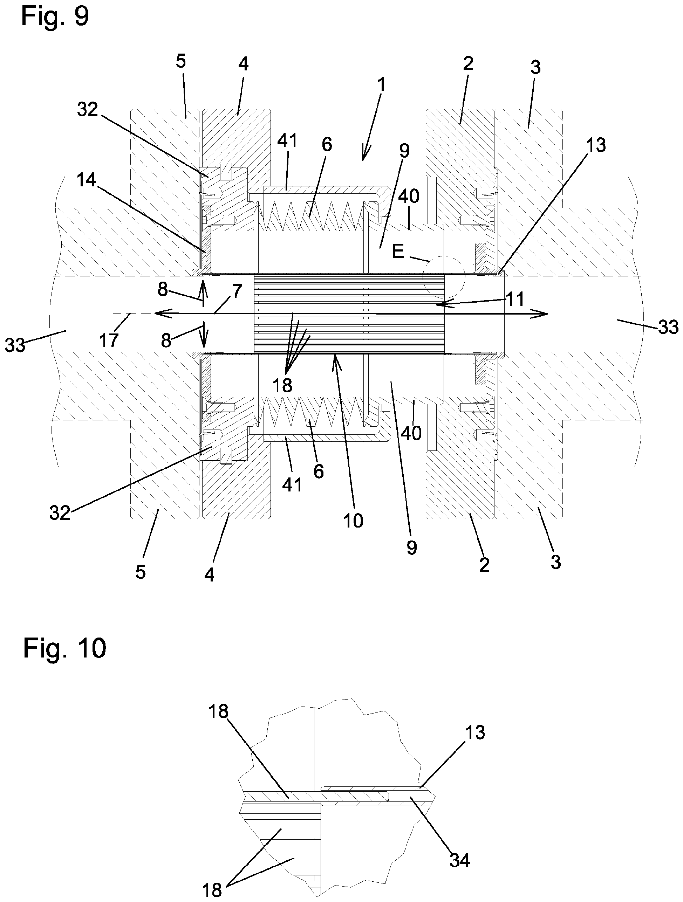

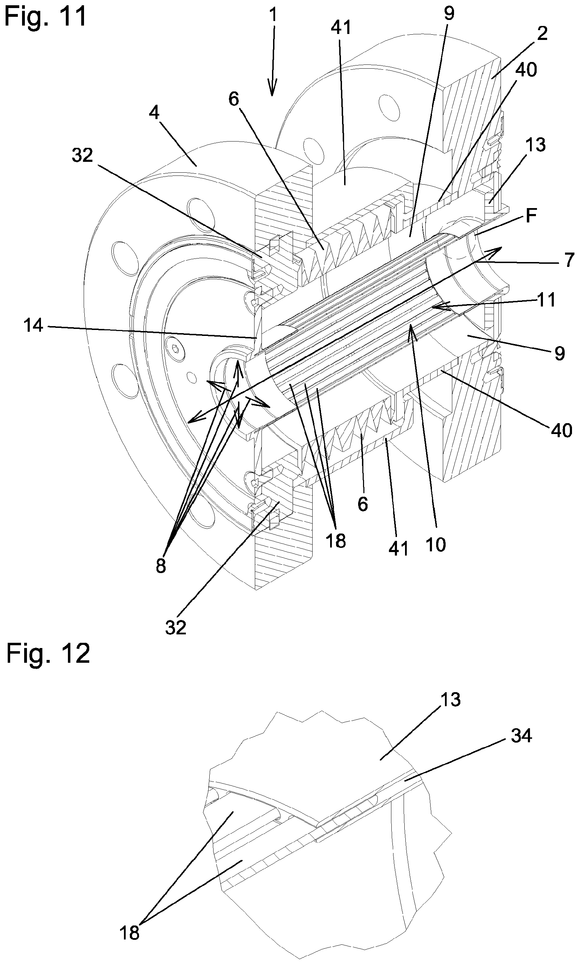

Das in den Fig. 9 bis 12 gezeigte dritte Ausführungsbeispiel der Erfindung ist dem bereits geschilderten zweiten Ausführungsbeispiel der Erfindung gemäß der Fig. 5 bis 8 sehr ähnlich. Der einzige Unterschied zum zweiten Ausführungsbeispiel besteht darin, dass die Stäbe 18 des Leitungselementes 10 hier keinen kreisrunden Querschnitt aufweisen, sondern als abgeflachte Stäbe 18 ausgebildet sind. Fig. 9 zeigt bei diesem Ausführungsbeispiel wiederum einen Längsschnitt, Fig. 10 den Bereich E aus Fig. 9 vergrößert. Fig. 11 zeigt eine perspektivische Darstellung eines entsprechenden Längsschnitts durch die Verbindungseinrichtung 1 und Fig. 12 den Bereich F aus Fig. 11 vergrößert. In Fig. 12 sieht man besonders gut die Ausbildung als abgeflachte Stäbe 18, welche in entsprechenden Stabaufnahmehohlräumen 34 der beiden Anschlusselemente 13 und 14 gelagert sind.

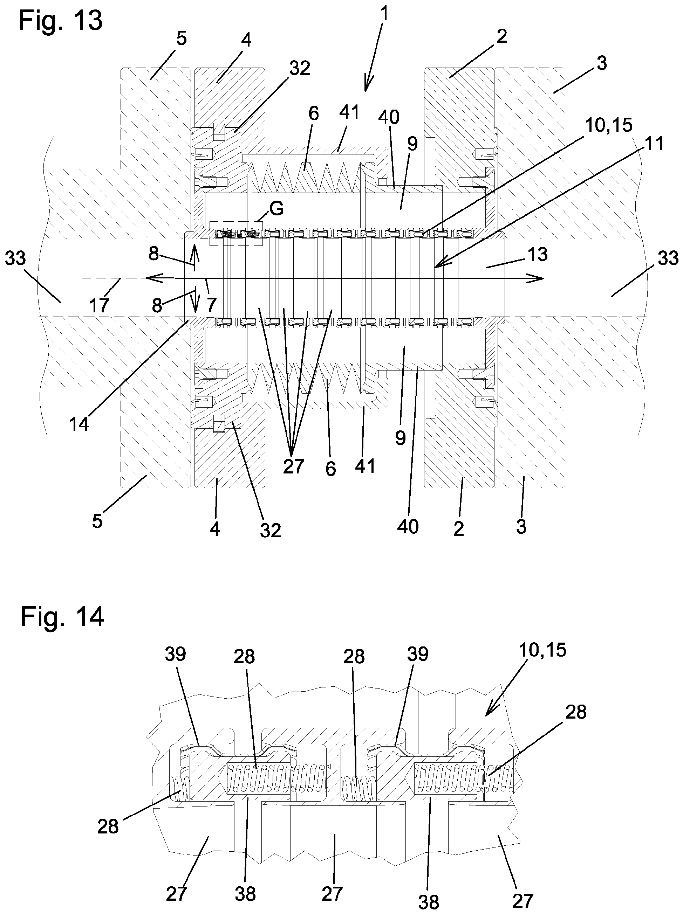

Die Fig. 13 bis 16 zeigen Darstellungen zu einem vierten Ausführungsbeispiel der Erfindung. Bei diesem ist das Leitungselement 10 als eine Ringfeder 15 ausgebildet. In anderen Worten könnte man auch sagen, dass das Leitungselement 10 eben aus einer Ringfeder 15 besteht. Natürlich wäre es auch möglich, dass das Leitungselement 10 nur bereichsweise eine solche Ringfeder 15 aufweist und ansonsten anders ausgebildet ist.

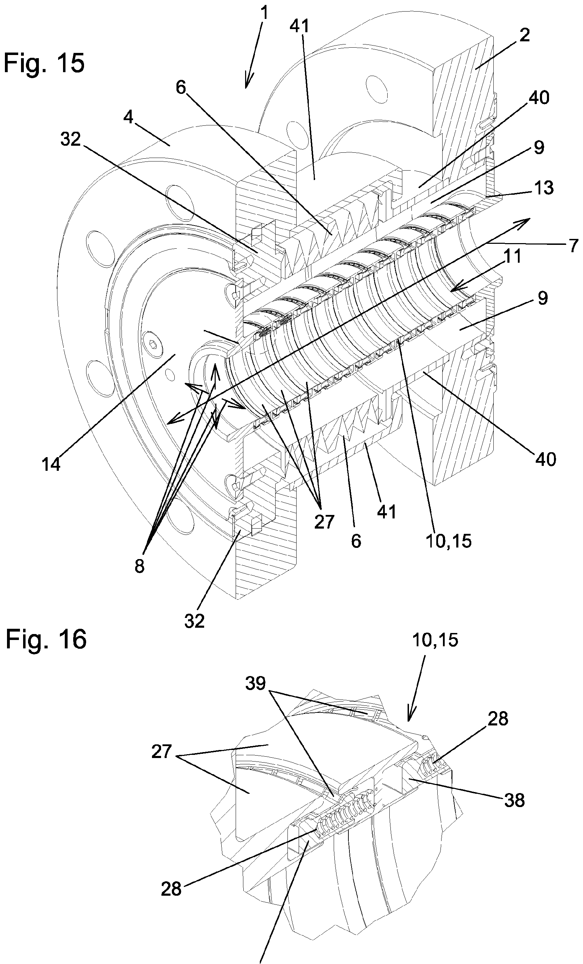

Fig. 13 zeigt einen Längsschnitt durch die Verbindungseinrichtung 1. Fig. 14 zeigt den Bereich G aus Fig. 13 vergrößert. Fig. 15 zeigt wiederum einen Längsschnitt durch eine entsprechende perspektivische Darstellung dieser Verbindungseinrichtung 1. Fig. 16 zeigt den Bereich H aus Fig. 15 vergrößert.

Die Ringfeder 15 weist eine Abfolge von hintereinander angeordneten Ringelementen 27 auf. Diese Ringelemente 27 können im Wesentlichen in sich starr ausgebildet sein. Die aufeinanderfolgenden Ringelemente 27 sind mittels elastischen Elementen 28 miteinander verbunden und so eben relativ zueinander bewegbar. Der hier konkret realisierte Aufbau ist besonders gut in den Fig. 14 und 16 zu sehen. Dort sieht man, dass in diesem Ausführungsbeispiel die elastischen Elemente 28 als Schraubenfedern ausgebildet sind. Natürlich könnte es sich hier auch um andere geeignete Arten von Federn bzw. elastischen Körpern handeln. Die elastischen Elemente 28 lassen jedenfalls eine Relativbewegung der Ringelemente 27 sowohl in Längsrichtung 7 als auch in die Querrichtung 8 zu. Die elastischen Elemente 28 sorgen auch für eine entsprechende Rückstellung, wenn die von außen auf die Flansche 2 und 4 wirkenden Kräfte nicht mehr vorhanden sind. Im hier konkret gezeigten Ausführungsbeispiel befinden sich zwischen zwei jeweils benachbarten Ringelementen 27 Zwischenringelemente 38 und zusätzlich elektrische Schleifkontakte 39. Die elektrischen Schleifkontakte 39 sind entsprechend flexibel ausgebildet und sorgen für eine sichere elektrische Kontaktierung der aufeinanderfolgenden Ringelemente 27. In den Zwischenringelementen 38 sind entsprechende Enden der elastischen Elemente 28 gelagert, so wie dies in den Fig. 14 und 16 gut zu sehen ist. Auch bei diesem Ausführungsbeispiel stellt diese besondere Ausführung des Leitungselementes 10 sicher, dass es bei Relativverschiebungen der Flansche 2 und 4 in Längsrichtung 7 oder Querrichtung 8 nicht zu einer Verengung der Querschnittsfläche des Leitungshohlraums 11 kommt. Somit sorgt auch diese Art eines erfindungsgemäßen Leitungselementes 10 dafür, dass es bei einer Relativverschiebung zwischen den beiden Flanschen 2 und 4 nicht zu einer negativen Beeinflussung der durch den Leitungshohlraum 11 hindurchgeführten geladenen Teilchen bzw. Strahlen aus solchen geladenen Teilchen kommt.

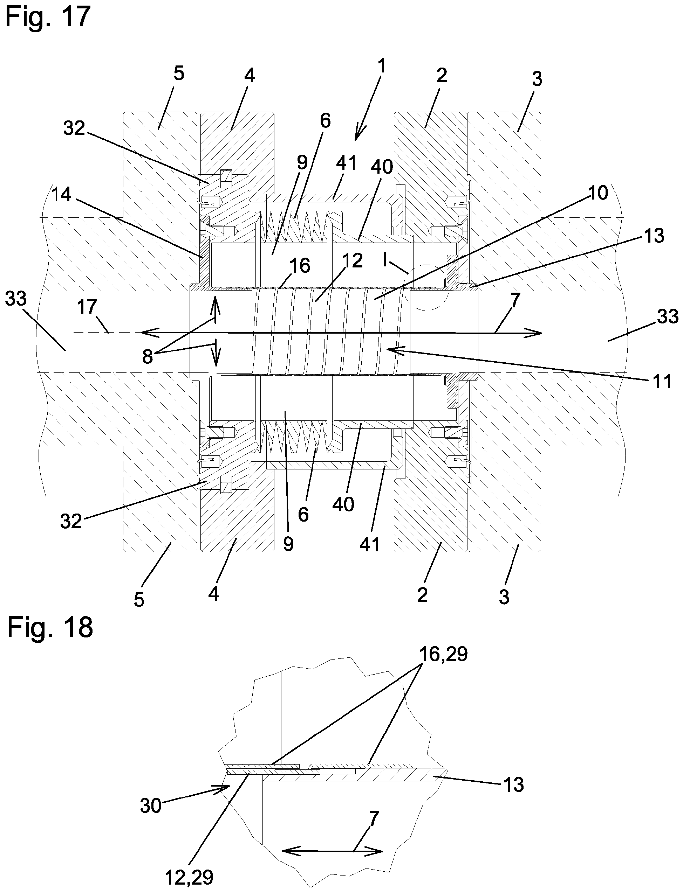

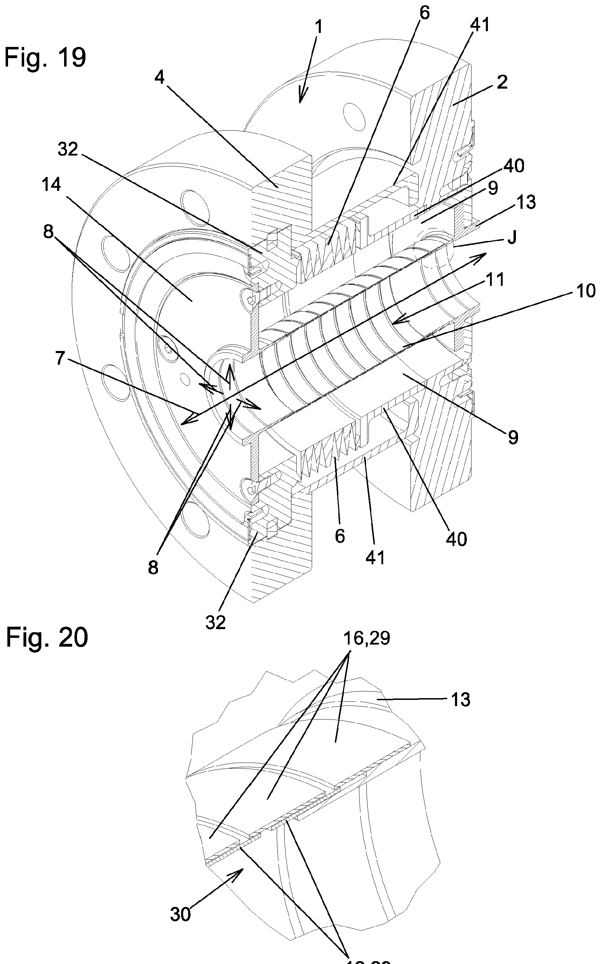

Bei dem in den Fig. 17 bis 20 gezeigten fünften Ausführungsbeispiel der Erfindung handelt es sich um eine Variante, bei der das Leitungselement 10 aus zumindest einer Schraubenfeder 16 ausgebildet ist. Fig. 17 zeigt wiederum einen Längsschnitt durch die Verbindungseinrichtung 1. In Fig. 18 ist der Bereich I vergrößert dargestellt. Fig. 19 zeigt eine perspektivische Darstellung im Längsschnitt und Fig. 20 den Bereich J aus Fig. 19. Auch wenn grundsätzlich eine einzige Schraubenfeder 16 ausreichen würde, um die beiden Anschlusselemente 13 und 14 elektrisch leitend miteinander zu verbinden, und den Leitungshohlraum 11 zu umgeben, so ist in diesem Ausführungsbeispiel doch vorgesehen, dass das Leitungselement 10 zwei Schraubenfedern 12 und 16 aufweist, wobei eine der Schraubenfedern 12 in einem Innenraum 30 der anderen Schraubenfeder 16 angeordnet ist. Die Windungen 29 der beiden Schraubenfedern 12 und 16 sind in Längsrichtung 7 der Verbindungseinrichtung 1 zueinander versetzt angeordnet, so wie dies in den Fig. 18 und 20 auch gut zu sehen ist. Die Windungen 29 beider Schraubenfedern 12 und 16 liegen jeweils auf einer gedachten Kreiszylindermantelfläche. Die Schraubenfedern 12 bzw. 16 bzw. ihre Windungen 29 lassen bei einer entsprechenden Relativverschiebung zwischen den Flanschen 2 und 4 eine entsprechende elastische Verformung des Leitungselementes 10 zu, ohne dass der Öffnungsquerschnitt des Leitungshohlraums 11 sich wesentlich ändert. Auch dies stellt sicher, dass die durch den Leitungshohlraum 11 hindurchgeführten geladenen Teilchen bzw. Strahlen aus geladenen Teilchen nicht negativ beeinflusst werden. Die Windungen 29 sind relativ zueinander elastisch bewegbar, sodass auch für eine entsprechende Rückstellung gesorgt ist, wenn die Verschiebung zwischen den Flanschen 2 und 4 wieder aufgehoben ist.

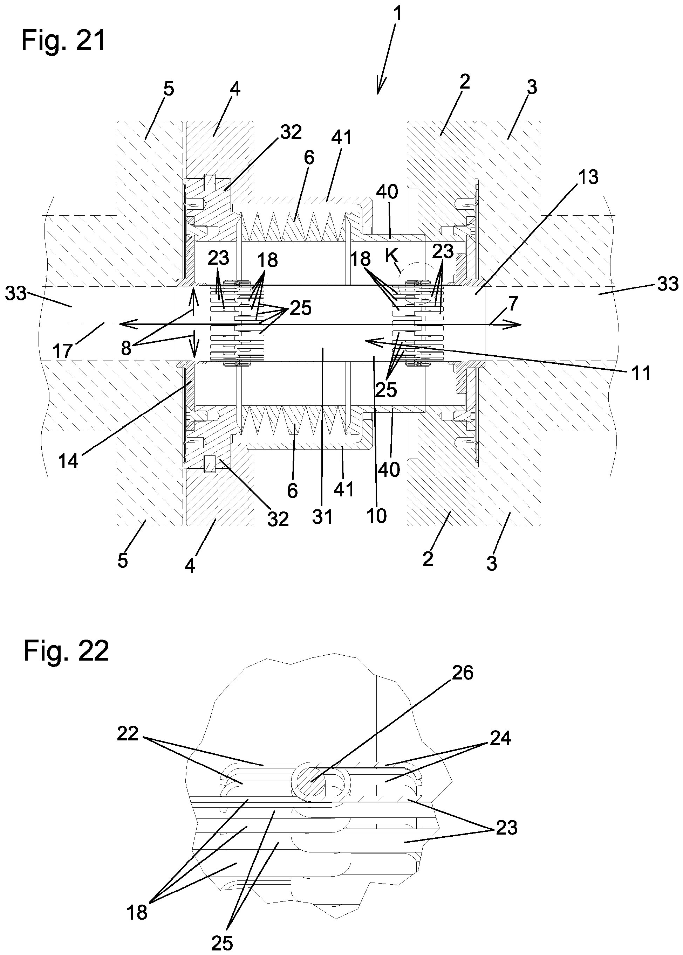

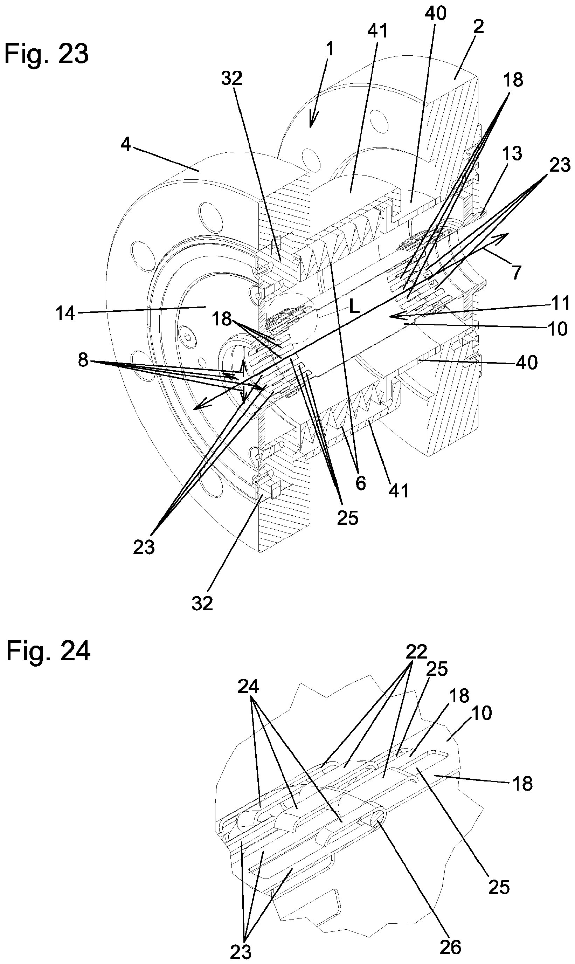

Das sechste Ausführungsbeispiel in den Fig. 21 bis 24 zeigt nun eine Variante eines Leitungselementes 10, bei dem die zum jeweiligen Anschlusselement 13 bzw. 14 hinweisenden Enden der Stäbe 18 des Leitungselementes 10 jeweils eine Umbiegung 22 aufweisen. Fig. 21 zeigt wiederum einen Längsschnitt, Fig. 22 den Bereich K aus Fig. 21 vergrößert. In Fig. 23 ist ein perspektivischer Längsschnitt dargestellt. Fig. 24 zeigt den Bereich L aus Fig. 23 vergrößert.

In diesem Ausführungsbeispiel ist der Verbindungsbereich 31 der Stäbe 18 im mittigen Bereich des Leitungselementes 10 relativ breit ausgebildet. Dies muss natürlich nicht zwingend so sein. Er könnte natürlich auch schmäler ausgeführt sein, wie dies z.B. eben in dem ersten Ausführungsbeispiel aus Fig. 1 bis 4 der Fall ist.

In diesem Ausführungsbeispiel ist es jedenfalls so, dass die jeweiligen Anschlusselemente 13 und 14 ebenfalls Stäbe 23 aufweisen. Auch diese Stäbe 23 haben jeweils eine Umbiegung 24. Die Umbiegungen 24 der Stäbe 23 des jeweiligen Anschlusselementes 13 bzw. 14 sind in Zwischenräumen 25 zwischen den Umbiegungen 20 der Stäbe 18 des Leitungselementes 10 angeordnet. Durch die Umbiegungen 24 der Stäbe 23 des jeweiligen Anschlusselementes 13 und 14 und durch die Umbiegungen 22 der Stäbe 18 des Leitungselementes 10 ist jeweils eine Verbindungsstange 26 hindurchgeführt, wie dies in den Fig. 22 und 24 gut zu sehen ist. Sowohl die Umbiegungen 22 der Stäbe 18 als auch die Umbiegungen 24 der Stäbe 23 sind jeweils in einer Art Langloch ausgeführt, sodass die jeweiligen Verbindungsstangen 26 in Längsrichtung 7 verschiebbar in den Umbiegungen 22 und 24 gelagert sind. Auch dies erlaubt eine Kompensation von Relativbewegungen der beiden Flansche 2 und 4 sowohl in Längsrichtung 7 als auch in Querrichtung 8, ohne dass es hierdurch zu relevanten Änderungen im Öffnungsquerschnitt des Leitungshohlraums 11 kommt. Auch hierdurch bleibt der Verlauf der durch den Leitungshohlraum 11 hindurchgeführten geladenen Teilchen bzw. Strahlen an solchen Teilchen im Wesentlichen unbeeinflusst, wenn die Flansche 2 und 4, z.B. thermisch bedingt, mit dem Leitungssystem relativ zueinander bewegt werden.

**Legende zu den Hinweisziffern:**

| | | | |
|---|---|---|---|
| 1 | Verbindungseinrichtung | 30 | Innenraum |
| 2 | erster Flansch | 31 | Verbindungsbereich |
| 3 | erste Leitung | 32 | Drehlagerring |
| 4 | zweiter Flansch | 33 | Leitungsinnenraum |
| 5 | zweite Leitung | 34 | Stabaufnahme |
| 6 | Faltenbalg | 38 | Zwischenringelement |
| 7 | Längsrichtung | 39 | elektrischer |
| 8 | Querrichtung | | Schleifkontakt |
| 9 | Innenraum | 40 | Mantelrohr |
| 10 | Leitungselement | 41 | Mantelrohr |
| 11 | Leitungshohlraum | | |
| 12 | Schraubenfeder | | |
| 13 | Anschlusselement | | |
| 14 | Anschlusselement | | |
| 15 | Ringfeder | | |
| 16 | Schraubenfeder | | |
| 17 | Drehachse | | |
| 18 | Stab | | |
| 19 | Auswölbung | | |
| 20 | Auswölbung | | |
| 21 | Stützschulter | | |
| 22 | Umbiegung | | |
| 23 | Stab | | |
| 24 | Umbiegung | | |
| 25 | Zwischenraum | | |
| 26 | Verbindungsstange | | |
| 27 | Ringelement | | |
| 28 | elastisches Element | | |
| 29 | Windung | | |

## Patentansprüche

1. Verbindungseinrichtung (1) für ein Leitungssystem zum Hindurchführen von geladenen Teilchen, wobei die Verbindungseinrichtung (1) einen ersten Flansch (2) zum Verbinden mit einer ersten Leitung (3) oder Kammer des Leitungssystems und einen zweiten Flansch (4) zum Verbinden mit einer zweiten Leitung (5) oder Kammer des Leitungssystems und einen Faltenbalg (6) aufweist, wobei der erste Flansch (2) und der zweite Flansch (4) unter Zwischenschaltung des Faltenbalgs (6) miteinander verbunden sind und der erste Flansch (2) und der zweite Flansch (4) zur Kompensation von Verschiebungen zwischen der ersten Leitung (3) oder Kammer des Leitungssystems und der zweiten Leitung (5) oder Kammer des Leitungssystems in einer Längsrichtung (7) der Verbindungseinrichtung (1) und in zumindest einer dazu abgewinkelten Querrichtung (8) der Verbindungseinrichtung (1) relativ zueinander bewegbar sind, wobei in einem zumindest bereichsweise vom Faltenbalg (6) umgebenen Innenraum (9) der Verbindungseinrichtung (1) ein Leitungselement (10) angeordnet ist, welches die Flansche (2, 4) elektrisch leitend miteinander verbindet und einen Leitungshohlraum (11) zum Hindurchführen der geladenen Teilchen umgibt, **dadurch gekennzeichnet, dass** am ersten Flansch (2) und am zweiten Flansch (4) jeweils ein Anschlusselement (13, 14) zum elektrischen Verbinden des Leitungselements (10) mit dem jeweiligen Flansch (2, 4) angeordnet ist, wobei das Leitungselement (10) in oder an beiden Anschlusselementen (13, 14) bewegbar gelagert ist und/oder wobei das Leitungselement (10) zumindest eine Ringfeder (15) oder zumindest eine Schraubenfeder (16) aufweist oder daraus besteht.

2. Verbindungseinrichtung (1) nach Anspruch 1, **dadurch gekennzeichnet, dass** zumindest eines der Anschlusselemente (13, 14), vorzugsweise um eine zur Längsrichtung (7) der Verbindungseinrichtung (1) koaxiale oder zumindest parallele Drehachse (17), drehbar an dem Flansch (2, 4) gelagert ist, an dem es angeordnet ist.

3. Verbindungseinrichtung (1) nach Anspruch 1 oder 2, **dadurch gekennzeichnet, dass** das Leitungselement (10) eine Vielzahl von Stäben (18) aufweist, wobei die Stäbe (18) parallel zueinander verlaufend und voneinander beabstandet angeordnet sind und gemeinsam einen Teilbereich des Leitungshohlraums (11) oder den gesamten Leitungshohlraum (11) umgeben.

4. Verbindungseinrichtung (1) nach Anspruch 3, **dadurch gekennzeichnet, dass** die Stäbe (18) jeweils in oder an beiden Anschlusselementen (13, 14), vorzugsweise in Stabaufnahmehohlräumen (34) der beiden Anschlusselemente (13, 14), bewegbar und elektrisch leitend gelagert sind und/oder dass die Stäbe (18) jeweils einen kreisrunden Querschnitt aufweisen oder als abgeflachte Stäbe (18) ausgebildet sind.

5. Verbindungseinrichtung (1) nach Anspruch 3 oder 4, **dadurch gekennzeichnet, dass** an Stäben (23) des jeweiligen Anschlusselements (13, 14) zur elektrisch leitenden Verbindung mit jeweils einem Stab (18) des Leitungselements (10) jeweils zwei, in der Längsrichtung (7) der Verbindungseinrichtung (1) voneinander beabstandete, Auswölbungen (19, 20) ausgebildet sind, wobei die Stäbe (23) mit den Auswölbungen (19, 20) am jeweiligen Stab (18) des Leitungselements (10) elektrisch leitend anliegen und der jeweilige Stab (18) des Leitungselements (10) in einem Bereich zwischen den beiden Auswölbungen (19, 20) auf der dem jeweiligen Stab (23) des jeweiligen Anschlusselements (13, 14) gegenüberliegenden Seite von einer Stützschulter (21) der Verbindungseinrichtung (1) abgestützt ist.

6. Verbindungseinrichtung (1) nach Anspruch 3 oder 4, **dadurch gekennzeichnet, dass** die zum jeweiligen Anschlusselement (13, 14) hin weisenden Enden der Stäbe (18) des Leitungselementes (10) jeweils eine Umbiegung (22) aufweisen und das jeweilige Anschlusselement (13, 14) Stäbe (23) mit Umbiegungen (24) aufweist, wobei die Umbiegungen (24) der Stäbe (23) des jeweiligen Anschlusselementes (13, 14) in Zwischenräumen (25) zwischen den Umbiegungen (22) der Stäbe (18) des Leitungselements (10) angeordnet sind und durch die Umbiegungen (24) der Stäbe (23) des jeweiligen Anschlusselementes (13, 14) und durch die Umbiegungen (22) der Stäbe (18) des Leitungselements (10) eine Verbindungsstange (26) hindurchgeführt ist.

7. Verbindungseinrichtung (1) nach Anspruch 1 oder 2, **dadurch gekennzeichnet, dass** die Ringfeder (15), welche Teil des Leitungselementes (10) ist oder dieses ausbildet, eine Abfolge von hintereinander angeordneten Ringelementen (27) aufweist, wobei die jeweils aufeinanderfolgenden Ringelemente (27) mittels elastischen Elementen (28) miteinander verbunden und relativ zueinander bewegbar sind.

8. Verbindungseinrichtung (1) nach Anspruch 1 oder 2, **dadurch gekennzeichnet, dass** die Schraubenfeder (16), welche Teil des Leitungselementes (10) ist oder dieses ausbildet, eine Vielzahl von hintereinander angeordneten Windungen (29) aufweist, welche elastisch relativ zueinander bewegbar sind.

9. Verbindungseinrichtung (1) nach Anspruch 8, **dadurch gekennzeichnet, dass** die Windungen (29) auf einer gedachten Kreiszylindermantelfläche angeordnet sind.

10. Verbindungseinrichtung (1) nach Anspruch 8 oder 9, **dadurch gekennzeichnet, dass** das Leitungselement (10) zwei Schraubenfedern (12, 16) aufweist oder aus diesen besteht, wobei eine der Schraubenfedern (12) in einem Innenraum (30) der anderen Schraubenfeder (16) angeordnet ist, wobei vorzugsweise vorgesehen ist, dass die Windungen (29) der beiden Schraubenfedern (12, 16) in Längsrichtung (7) der Verbindungseinrichtung (1) zueinander versetzt angeordnet sind.
